## Europäisches Patentamt
## European Patent Office
## Office européen des brevets

(19)

(11) Numéro de publication: **0 192 906 B1**

(12)
# FASCICULE DE BREVET EUROPEEN

(45) Date de publication du fascicule du brevet:
27.09.89

(51) Int. Cl.⁴: **F 28 D 13/00, B 01 J 8/38, F 22 B 31/00**

(21) Numéro de dépôt: 85402625.9

(22) Date de dépôt: 24.12.85

(54) Echangeur perfectionné et méthode pour réaliser le transfert thermique à partir de particules solides.

(30) Priorité: 28.12.84 FR 8419962

(43) Date de publication de la demande:
03.09.86 Bulletin 86/36

(45) Mention de la délivrance du brevet:
27.09.89 Bulletin 89/39

(84) Etats contractants désignés:
BE DE FR GB IT NL SE

(56) Documents cités:
EP-A- 0 006 307
EP-A- 0 033 713
EP-A- 0 073 650
EP-A- 0 093 063
EP-A- 0 095 427
EP-A- 0 117 634
WO-A-83/03294
FR-A- 1 128 881
FR-A- 2 032 925
FR-A- 2 261 497
FR-A- 2 343 980
GB-A- 1 048 544
US-A- 2 759 710
US-A- 2 842 102
US-A- 3 087 253
US-A- 3 565 022

HUITIEME SESSION DES JOURNEES
INTERNATIONALES D'ETUDE DES CENTRALES

(73) Titulaire: INSTITUT FRANCAIS DU PETROLE, 4, Avenue de Bois-Préau, F-92502 Rueil-Malmaison (FR)
Titulaire: Société FLUIDBI, 3, allée de l'Aventure, F-77200 Emerainville-Torcy (FR)

(72) Inventeur: Hellio, Hervé, 3, allée de l'Aventure, F-77200 Emerainville - Torcy (FR)
Inventeur: Feugier, Alain, 3, ruelle du Moulle Morainvilliers, F-78630 Orgeval (FR)
Inventeur: Martin, Gérard, 29-31, boulevard National, F-92500 Rueil Malmaison (FR)
Inventeur: Pontier, Renaud, rue du Pont d'Agonssat, F-62136 La Couture (FR)

(74) Mandataire: Aubel, Pierre et al, Institut Français du Pétrole Département Brevets 4, avenue de Bois Préau, F-92502 Rueil-Malmaison (FR)

(56) Documents cités: (suite)
ELECTRIQUES MODERNES, vol. 1, 26-30 octobre 1981, pages 9.3-9.10, A.I.M. Association des Ingénieurs Electriciens sortis de l'institut Montefiore, Liège, BE; R. DUMON: "Les technologies de combustion en lit fluidisé"

## Description

La présente invention concerne un échangeur perfectionné et une méthode pour réaliser le transfert thermique entre des particules solides contenues ou circulant dans une enceinte et le milieu extérieur.

La présente invention concerne également l'utilisation de l'échangeur dans la boucle de circulation des particules solides d'une chaudière à lit circulant.

Les dispositifs selon l'art antérieur sont encombrants et présentent généralement, à volume égal, des performances moindres que celles obtenues par le dispositif et le procédé selon la présente invention.

Le brevet US-A-3 087 253 présente un dispositif qui nécessite de grande surface d'échange car il n'y a pas, selon ce brevet antérieur, de recirculation des particules solides entre l'enceinte centrale et le reste du dispositif.

L'art antérieur peut être illustré par les brevets suivants: EP-A 0 095 427, EP-A 0 006 307, EP-A 0 033 713, EP-A 0 093 063, FR-A 2 261 497, FR-A 1 128 881, GB-A 1 577 717, GB-A 1 299 264, GB-A 10 485 544, US-A 2 842 102, US-A 3 565 022, US-A 4 404 755, US-A 4 538 549, US-A 2 759 710, ainsi que par l'article intitulé «Les technologies de combustion en lit Fluidise» de R. Dumon publié par l'A.I.M. Association des Ingénieurs Electriciens sortis de l'institut Montefiore, à l'occasion des Huitième session des journées internationales d'étude des centrales électriques modernes, Liège du 26 au 30 octobre 1981.

Dans le brevet FR-A-2 343 980, tous les échangeurs sont regroupés dans un seul et même compartiment.

L'échangeur selon la présente invention permet, notamment , une grande souplesse des transferts thermiques entre des particules solides et le milieu extérieur sans pour autant modifier le débit des particules solides. L'échangeur selon l'invention présente les avantages suivants:

– une grande compacité liée aux excellents coefficients d'échange thermique dans les lits fluidisés.

– une facilité d'ajustement de la puissance d'échange demandée qui peut être obtenue par un compartimentage important ou en utilisant des compartiments de différentes tailles.

– une homogénéité de température du lit fluidisé.

Suivant certains modes de réalisation, cette homogénéité des températures du lit fluidisé est obtenue même lorsqu'il est alimenté avec des débits de solides très important, grâce à la présence de déflecteurs.

Lorsqu'il est utilisé dans une chaudière à lit circulant, l'échangeur selon la présente invention permet une plus grande simplicité de l'ensemble du dispositif d'échange externe et de recirculation avec en particulier un point de réinjection unique des cendres, une grande souplesse d'utilisation liée à l'existence de 2 leviers de commande des puissances échangées comme cela sera précisé plus loin dans la présente description.

Ainsi la présente invention concerne un échangeur perfectionné permettant le transfert d'énergie thermique entre, notamment, des particules solides et le millieu extérieur audit échangeur, cet échangeur comportant des orifices d'entrée et de sortie desdites particules. Cet échangeur comporte une enceinte principale communiquant avec lesdits orifices d'entrée et de sortie, cette enceinte comportant des moyens propres d'alimentation en gaz de fluidisation et plusieurs compartiments auxiliaires, chacun de ceux-ci comportant au moins un orifice permettant le transfert des particules solides de l'enceinte principale vers le compartiment auxiliaire concerné, au moins un orifice permettant le transfert des particules solides du compartiment auxiliaire vers l'enceinte principale et des moyens d'alimentation en gaz de fluidisation de ce compartiment, ces moyens permettant une circulation desdites particules solides dans ledit compartiment et des moyens d'extraction de ladite énergie thermique.

L'échangeur selon la présente invention comporte une première enveloppe cylindrique contenant une deuxième enveloppe cylindrique. Il se caractérise en ce qu'il comporte au moins une enveloppe intermédiaire contenue dans l'espace délimité par lesdites première et deuxième enveloppes, une première et une deuxième plaques délimitant avec ladite première enveloppe un espace clos, en ce que l'espace interne délimité par la deuxième enveloppe définit ladite enceinte principale et les espaces annulaires délimités par les différentes enveloppes cylindriques définissent lesdits compartiments auxiliaires et en ce que les moyens d'extraction de l'énergie sont des tubes en serpentin.

Cet échangeur se caractérise également en ce que l'un au moins desdits compartiments comporte un dispositif de contrôle du débit de gaz de fluidisation passant dans ledit compartiment.

Le dispositif de contrôle du débit de gaz de fluidisation pourra comporter un organe adapté à fonctionner en tout ou rien.

L'échangeur selon la présente invention peut être avantageusement utilisé dans une chaudière à lit circulant comportant un réacteur et un séparateur.

La présente invention concerne également une méthode pour contrôler le transfert thermique entre des particules solides et contenues dans une enceinte et le milieu extérieur. Cette méthode se caractérise en ce que l'enceinte est partagée en plusieurs zones et en ce que l'on contrôle séparément le débit d'air de fluidisation de l'une au moins de ces zones.

La présente invention sera mieux comprise et ses avantages apparaîtront plus clairement à la lecture de la description qui suit d'exemples particuliers, nullement limitatifs, illustrés par les figures ci-annexées parmi lesquelles:

- les figures 1 et 2 illustrent un mode de réalisation de l'échangeur selon la présente invention, la figure 1 représente la coupe A-A de la figure 2,

- la figure 3 montre l'intégration de l'échangeur selon la présente invention dans une chaudière à lit circulant, et

- la figure 4 un exemple de courbes de fonctionnement.

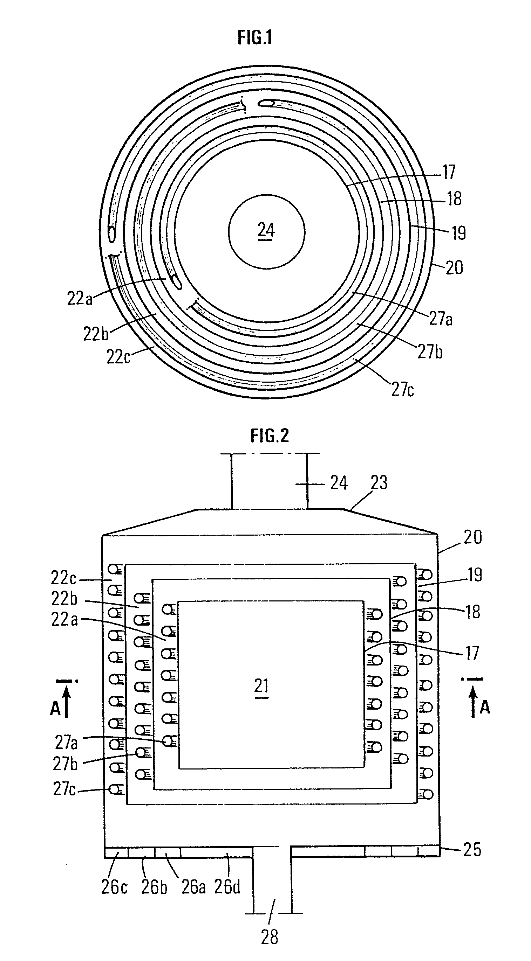

La figure 1 représente un mode de réalisation d'un échangeur selon la présente invention.

Chaque compartiment comporte des moyens de transfert d'énergie thermique tels des tubes échangeurs dans lesquels peut circuler un fluide caloporteur. Il est à noter que ces moyens de transfert thermique peuvent soit apporter de l'énergie thermique aux particules solides, soit, au contraire, en extraire.

Dans le cas du mode de réalisation représenté à la figure 1, les particules solides pénètrent dans l'enceinte principale 21 par l'orifice 24 aménagée dans la plaque, ou chapeau 23 qui ferme l'échangeur à sa partie supérieure.

Les particules solides ressortent par l'orifice 28 aménagé dans la plaque 25, ou fond, qui ferme l'échangeur à sa partie inférieure. Bien entendu on ne sortira pas du cadre de la présente invention si les orifices d'introduction et d'extraction des particules solides sont localisés à d'autres endroits.

L'échangeur est délimité par une première enveloppe externe cylindrique 20. Il comporte une enceinte principale 21 délimitée par une deuxième enveloppe cylindrique 17.

L'espace annulaire compris entre la première enveloppe cylindrique 20 et la deuxième enveloppe cylindrique 17 comporte des enveloppes cylindriques intermédiaires 19 et 18. On délimite ainsi trois compartiments auxiliaires 22a, 22b et 22c (voir la figure 1 qui représente une coupe de la figure 2).

L'échangeur de la figure 2 comporte un chapeau 23 dans lequel est aménagé un orifice d'entrée des particules solides et un fond 25 équipé d'un orifice de sortie 28 des particules solides et de moyens de fluidisation 26a, 26b et 26c des compartiments auxiliaires et des moyens de fluidisation 26d de l'enceinte principale.

Les moyens de transfert de l'énergie thermique sont constitués de tubes échangeurs 27a, 27b et 27c enroulés en serpentin dans les différents compartiments auxiliaires.

Si les compartiments annulaires 27a, 27b et 27c comportent des parois latérales créant des sous-compartiments, les tubes échangeurs ne pourront pas s'enrouler entièrement autour des enveloppes cylindriques.

On ne décrira pas dans ce texte les différentes manières dont les enveloppes cylindriques peuvent être fixées dans l'échangeur, ces techniques étant connues de l'homme de l'art.

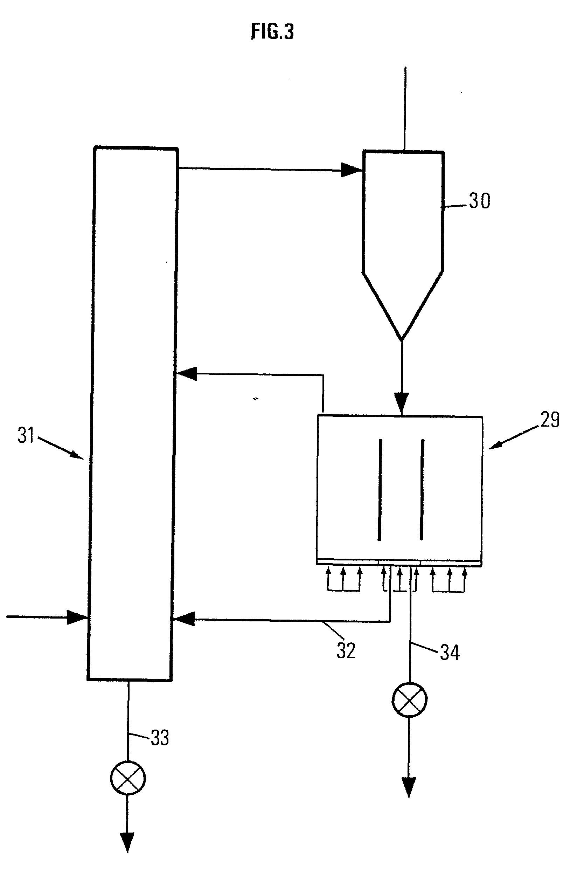

La figure 3 représente une chaudière à lit circulant. L'échangeur selon l'invention est utilisé en tant qu'échangeur externe 29.

Il s'insère entre le cyclone 30 et le dispositif de réinjection des cendres dans le réacteur 31. Il permet de fluidiser les particules captées par le cyclone 30 et d'en extraire une partie de leur chaleur sensible aux moyens de tubes vaporisateurs immergés dans le lit. Les coefficients d'échange de chaleur dans ce milieu sont très importants, en particulier si on les compare à ceux obtenus avec des dispositifs à lits mobiles ou à pluie de particules. Les puissances échangées par unité de surface de tubes sont 3 à 6 fois plus importantes que celles obtenues avec les échangeurs non fluidisés.

L'échangeur présente l'avantage de pouvoir être alimenté en continu avec les cendres captées, et de supporter des débits de recirculations très importants.

Les tubes vaporisateurs sont placés dans des compartiments auxiliaires séparés les uns des autres et en communication avec une enceinte principale. Celle-ci alimente les compartiments auxiliaires en solides chauds. L'échange de solides entre l'enceinte principale et les compartiments auxiliaires est facilité par la présence de déflecteurs 16 qui induisent des courants de circulation intenses et par l'utilisation de distributeurs d'air de fluidisation différenciés qui permettent de créer une aération plus importante au sein des compartiments auxiliaires. Cette configuration permet de maintenir constante la température sur l'ensemble de l'échangeur même lorsque celui-ci est traversé par des débits de solides très importants.

La puissance de l'installation peut être modulée en jouant sur la température ou sur la surface d'échange en contact avec le milieu fluidisé. A température de particules solides et à surface d'échange constantes, la température du lit fluidisé augmente avec le débit de solides. Donc le contrôle du débit de solides qui traversent l'échangeur est un moyen de contrôle de la puissance thermique. Dans la majorité des cas, on peut espérer atteindre une souplesse de l'ordre de 2.

La puissance peut également être réduite en défluidisant certains des compartiments auxiliaires: les tubes échangeurs sont alors plongés dans un lit fixe pour lequel les coefficients d'échange sont 10 à 20 fois moins importants que ceux des compartiments. Cette technique correspond donc à un neutralisation d'une partie de la surface d'échange.

La défluidisation d'un compartiment est réalisée en coupant l'air d'alimentation du distributeur. Chaque caisson de fluidisation peut être équipé d'une vanne fonctionnant en tout ou rien. Le nombre de compartiments est déterminé en fonction de la souplesse demandée à l'échangeur.

Par le biais de la défluidisation, on peut espérer atteindre une souplesse de 1 à 10 et en conjugant la défluidisation et le contrôle de la température des solides, la souplesse globale de l'échangeur est de 1 à 20 si l'alimentation des compartiments auxiliaires en air de fluidisation est du type tout ou rien. Les variations de puissance de l'échangeur seront donc d'autant plus souples que le nombre de ces compartiments est grand.

Sur la figure 3, la totalité des solides en circulation dans la boucle traverse l'échangeur 29, et le dispositif de réinjection, qui peut être de type vanne en L 32, est unique. Cette configuration, comme toute autre configuration faisant appel à un échangeur externe, suppose que le débit de solides qui échappent aux cyclones reste toujours inférieur au débit élémentaire de matières non combustibles. Cette situation n'étant pas nécessairement acquise dans tous les cas de figure, il est souhaitable de prévoir un dispositif de réinjection des solides captés par la chaudière sur fumées, voire par les filtres.

En marche normale, c'est-à-dire sans appauvrissement en solides de la boucle de circulation, deux dispositifs de soutirage permettent de contrôler l'inventaire global ainsi que la granulométrie de la charge. Le point de soutirage 33, situé à la base du réacteur, permet d'extraire les grosses particules, et celui 34 situé sous l'échangeur externe 19 permet de retirer les fines particules.

L'opérateur d'installations semblables à celle de la figure 3 dispose de deux paramètres pour faire varier la puissance échangée:

   – le débit de recyclage,

   – la fluidisation ou la défluidisation des compartiments de l'échangeur externe 29. Ceci permet de mieux optimiser le fonctionnement de la chaudière pour toutes ses allures de marche.

En première approximation et pour un réacteur fonctionant à une température de 850 °C, les puissances échangées ont pour expression:

Echangeur interne $E_1$ se trouvant dans le réacteur, $P_1 = h_1 \cdot S_1 (850 - T_t)$

Echangeur externe $E_2$, $P_2 = h_2 \cdot S_2 (T_r - T_t)$ où

$T_t$ : température de peau de tube en degrés Celsius

$T_r$ : température de recyclage en degrés Celsius

$h_i$ : coefficient d'échange thermique de l'échangeur i

$S_i$ : surface d'échange de l'échangeur i

Toute action sur le débit de recyclage permet de modifier le coefficient d'échange $h_1$, mais également $T_r$ comme le montre un bilan thermique réalisé sur l'échangeur externe

$$Q_E C_{ps} \cdot (850 - T_o) = h_2 \cdot S_2 \cdot (T_r - T_t) + Q_S \cdot C_{ps} \cdot (T_r - T_o)$$

avec:

$Q_E$ : débit massique de solides entrant

$C_{ps}$ : chaleur spécifique des solides

$Q_S$ : débit massique de solides sortant

$T_o$ : température de référence

En régime stable, les débits entrant et sortant sont égaux ($Q_E = Q_S$).

Donc:

$$Q_S \cdot C_{ps} \cdot (850 - T_r) = h_2 \cdot S_2 \cdot (T_r - T_t)$$

$$T_r = \cfrac{\cfrac{Q_S \cdot C_{ps}}{h_2 \cdot S_2} \cdot 850 + T_t}{\cfrac{Q_S \cdot C_{ps}}{h_2 \cdot S_2} + 1}$$

La puissance échangée par l'échangeur externe est donc

$$P_2 = h_2 \cdot S_2 \cdot (850 \, T_t) \left( 1 - \cfrac{1}{\cfrac{Q_S \cdot C_{ps}}{h_2 \cdot S_2} + 1} \right)$$

Elle augmente avec le débit de solides $Q_S$ pour atteindre la valeur limite

$$P_2 \infty = h_2 \cdot S_2 (850 - T_t)$$

Un exemple d'application est donné ci-après:

La répartition des puissances souhaitée étant la suivante:

   Echangeur interne: 3,53 MW

   Echangeur externe: 3,72 MW

   Chaudière sur fumées: 7,21 MW.

L'élément essentiel du dimensionnement des surfaces d'échange est la détermination des taux de recirculation en marche nominale et en marche réduite.

Bases de calcul:

– Marche nominale:

| | |
|---|---|
| Taux de recirculation | : 50 |
| Débit en circulation | : 215 t/h |
| Coefficient d'échange dans le réacteur | : 135 W/m². K |

– Marche réduite 1 (pas de défluidisation de l'échangeur externe):

| | |
|---|---|
| Taux de recirculation | : 10 |
| Débit en circulation | : 21,5 t/h |
| Coefficient d'échange dans le réacteur | : 70 W/m².K |

– Marche réduite 2 (défluidisation complète de l'échangeur externe);

| | |
|---|---|
| Taux de recirculation | : 5,4 |
| Débit en circulation | : 5,0 t/h |
| Coefficient d'échange dans le réacteur | : 60 W/m².K |

Le coefficient d'échange dans l'échangeur externe est supposé constant et égal à 300 W/m².K.

A partir de ces éléments, on peut dimensionner $E_1$ et $E_2$.

   Echangeur $E_1$ : $S_1 = 43,5$ m² avec un $\triangle T$ de 600 °C

   Echangeur $E_2$ : $T_2 = 785$ °C

          $S_2 = 23$ m² avec un $\triangle T$ de 535 °C

En marche réduite 1, les puissances échangées sont:

   Echangeur $E_1$ : $P_1 = 1,83$ MW

   Echangeur $E_2$ : $T_2 = 522$ °C

          $P_2 = 1,88$ MW

   Souplesse atteinte : 2

En marche réduite 2, les puissances échangées sont:

   Echangeur $E_1$ : $P_1 = 1,57$ MW

   Echangeur $E_2$ : $P_2 = 0$

   Souplesse atteinte : 4,6

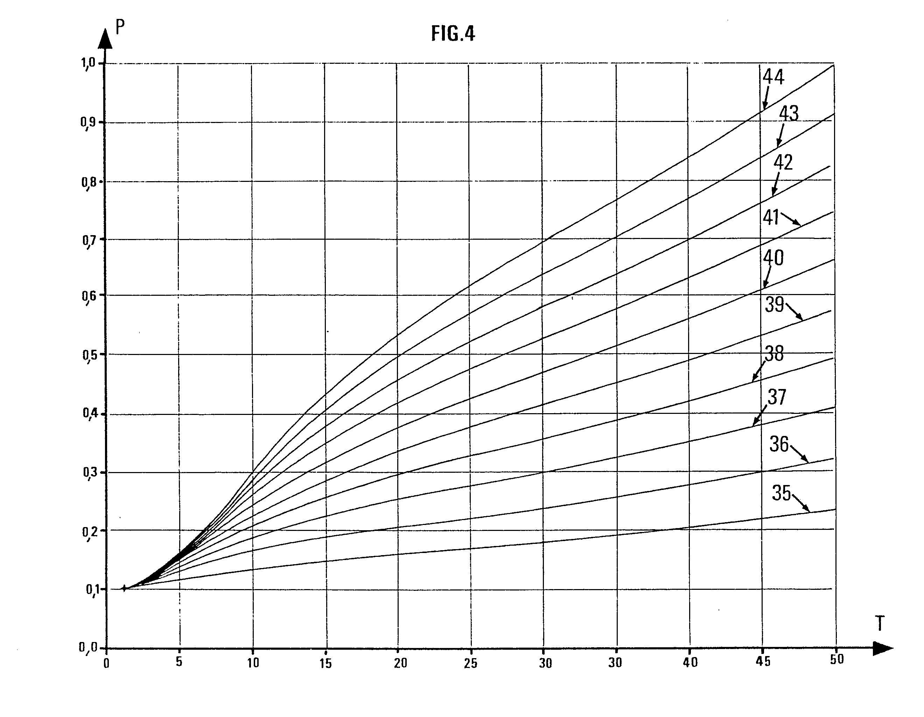

Enfin, la figure 4, qui est un autre exemple d'application, montre les possibilités de réglage dues à l'intégration d'un échangeur externe selon la présente invention dans une boucle de chaudière à lit circulant. En abscisses est représenté le taux de recirculation, égal au débit de circulation des solides divisé par le débit de combustible entrant dans la chaudière, et en ordonnées la puissance totale prélevée dans une telle boucle sur solides divisée par la puissance nominale prélevée sur solides.

L'échangeur externe comporte 10 compartiments de tailles égales.

Les courbes 35 à 43 correspondent à la mise en fonctionnement de 1, puis 2, puis 3 compartiments jusqu'à la totalité de ces compartiments.

## Revendications

1. Echangeur perfectionné permettant le transfert d'énergie thermique entre, notamment, des particules solides et le milieu extérieur audit échangeur, comportant des orifices d'entrée et de sortie desdites particules, une enceinte principale (21) communiquant avec lesdits orifices d'entrée (24) et de sortie (28), ladite enceinte comportant des moyens propres d'alimentation en gaz de fluidisation (26d) et plusieurs compartiments auxiliaires (22a, 22b, 22c), chacun de ceux-ci comportant au moins un orifice permettant le transfert des particules solides de ladite enceinte (21) vers ledit compartiment, au moins un orifice permettant le transfert des particules solides dudit compartiment (22a, 22b, 22c) vers ladite enceinte (21) et des moyens d'alimentation en gaz (26a, 26b, 26c) de fluidisation dudit compartiment, ces moyens permettant une circulation desdites particules solides dans ledit compartiment et des moyens d'extractions (27a, 27b, 27c) de ladite énergie thermique, au moins l'un desdits compartiments comporte un dispositif de contrôle du débit de gaz de fluidisation passant dans ledit compartiment, l'échangeur comportant en outre une première enveloppe cylindrique (20) contenant une deuxième enveloppe (17) cylindrique, caractérisé en ce qu'il comporte au moins une enveloppe (18 ou 19) contenue dans l'espace délimité par lesdites première et deuxième enveloppes, une première (25) et une deuxième plaques (23) délimitant avec ladite première enveloppe un espace clos, l'espace interne (21) délimité par la deuxième enveloppe définissant ladite enceinte principale et les espaces annulaires (22a, 22b ou 22c) délimités par les différentes enveloppes cylindriques définissent lesdits compartiments auxiliaires et en ce que les moyens d'extraction de l'énergie sont des tubes (27a–27c) en serpentin.

2. Echangeur selon la revendication 1, caractérisé en ce qu'il comporte des parois latérales situées dans lesdits espaces annulaires (22a–22c) délimitant lesdits compartiments.

3. Chaudière à lit circulant comportant un réacteur (31), un séparateur (30), caractérisé en ce qu'elle utilise un échangeur (29) conforme à la revendication 1.

4. Méthode spécialement adaptée pour un échangeur de chaleur selon la revendication 1, pour contrôler le transfert thermique entre des particules solides contenues dans une enceinte et le milieu extérieur, caractérisée en ce que cette enceinte est partagée en plusieurs zones et en ce que l'on contrôle séparément le débit d'air de fluidisation de l'une au moins de ces zones.

## Patentansprüche

1. Verbesserter Wärmeaustauscher, der die Wärmeübertragung insbesondere zwischen Feststoffpartikeln und der Umgebung ausserhalb des Wärmeaustauschers ermöglicht, mit Eintritts- und Austrittsöffnungen für diese Partikel, einem umschlossenen Hauptraum (21), der in Verbindung mit diesen Eintritts- (24) und Austrittsöffnungen (28) steht, wobei dieser umschlossene Raum Einrichtungen zum Speisen mit Fluidisierungsgas (26d) und mehrere Hilfskammern (22a, 22b, 22c) umfasst, von denen eine jede wenigstens eine Öffnung umfasst, die die Überführung der Feststoffpartikel aus diesem umschlossenen Raum (21) gegen diese Kammer ermöglichen, mit wenigstens einer Öffnung, die die Überführung der Feststoffpartikel aus dieser Kammer (22a, 22b, 22c) gegen diesen umschlossenen Raum (21) ermöglichen und Gasspeiseeinrichtungen (26a, 26b, 26c) zur Fluidisierung dieser Kammer, wobei diese Einrichtungen eine Zirkulation dieser Feststoffpartikel in dieser Kammer sowie Extraktionseinrichtungen (27a, 27b, 27c) dieser Wärmeenergie ermöglichen, wobei wenigstens eine dieser Kammern eine Regelvorrichtung für den Durchsatz an Fluidisierungsgas umfasst, das in dieser Kammer durchgeht, wobei der Austauscher im übrigen einen ersten zylindrischen Mantel (20) aufweist, der einen zweiten zylindrischen Mantel (17) enthält, dadurch gekennzeichnet, dass er wenigstens einen Mantel (18 oder 19), der in dem durch diesen ersten und zweiten Mantel begrenzten Raum enthalten ist, aufweist, wobei eine erste (25) und eine zweite der Platten (23) mit diesem ersten Mantel einen geschlossenen Raum begrenzen und der durch den zweiten Mantel begrenzte Innenraum (21) diesen umschlossenen Hauptraum definiert und die durch die unterschiedlichen zylindrischen Mäntel begrenzten Ringräume (22a, 22b oder 22c) diese Hilfskammern bilden und dass diese Energieextraktionseinrichtungen Schlangenrohre (27a–27c) sind.

2. Wärmeaustauscher nach Anspruch 1, gekennzeichnet durch seitliche in diesen Ringräumen (22a–22c) angeordnete diese Kammern begrenzende Wandungen.

3. Kessel mit zirkulierendem Bett mit einem Reaktor (31), einem Separator (30), dadurch gekennzeichnet, dass er einen Austauscher (29) nach Anspruch 1 benutzt.

4. Verfahren insbesondere ausgestaltet für einen Wärmeaustauscher nach Anspruch 1, zum Regeln der Übertragung von Wärmeenergie zwischen in einem umschlossenen Raum enthaltenen Feststoffpartikeln und der äusseren Umgebung, dadurch gekennzeichnet, dass dieser umschlossene Raum in mehrere Zonen unterteilt ist und dass man getrennt den Wirbel- oder Fluidisierungsluftdurchsatz wenigstens einer dieser Zonen regelt.

## Claims

1. An improved heat exchanger permitting the transfer of heat energy between, in particular, solid particles and the medium external to the said exchanger, comprising inlet and outlet ports for the said particles, a main chamber (21) communicating with the said inlet (24) and outlet (28) ports, the said chamber including a means suitable for supplying fluidising gas (26d) and several auxiliary compartments (22a, 22b, 22c), each of these comprising at least one port permitting the transfer of solid particles from the said chamber (21) to the said compartment, at least one port permitting the transfer of solid particles from the said compartment (22a, 22b, 22c) towards the said chamber (21) and a means for supplying fluidising gas (26a, 26b, 26c) for the said compartment, this method permitting a circulation of the said solid particles in the said compartment and a means for extracting (27a, 27b, 27c) the said heat energy, at least one of the said compartments includes a device for controlling the flow of fluidising gas passing in the said compartment, the exchanger also comprising a first cylindrical envelope or casing (20) containing a second cylindrical envelope or casing (17), characterised in that it includes at least one envelope (18 or 19) contained in the space formed by the said first and second envelopes, a first plate (25) and a second plate (23) forming with the said first envelope a closed space, the internal space (21) formed by the second envelope determining the said main chamber and the annular spaces (22a, 22b or 22c) formed by the different cylindrical envelopes determining the said auxiliary compartments and in that the means for extracting the heat energy are tubes (27a–27c) in coil form.

2. Heat exchanger in accordance with claim 1, characterised in that it includes side walls located in the said annular spaces (22a–22c) forming the said compartments.

3. Fluidised bed boiler comprising a reactor (31), a separator (30), characterised in that it utilises a heat exchanger (29) in accordance with claim 1.

4. Method specially adapted for a heat exchanger in accordance with claim 1, to control the transfer of heat between the solid particles contained in a chamber ant the external medium, characterised in that this chamber is divided into several zones and in that the flow of fluidising air may be controlled separately for at least one of these zones.

## FIG.1

## FIG.2

# FIG.3

FIG.4

EP 0 192 906 B1